Europäisches Patentamt

European Patent Office

Office européen des brevets

(11) Publication number: **0 264 249**
**A2**

## EUROPEAN PATENT APPLICATION

(21) Application number: 87309006.2

(22) Date of filing: 13.10.87

(51) Int. Cl.⁴: **G 05 D 23/32**
**F 24 D 19/10**

(30) Priority: 13.10.86 GB 8624463

(43) Date of publication of application:
20.04.88 Bulletin 88/16

(84) Designated Contracting States:
BE CH DE FR GB LI NL SE

(71) Applicant: **Pidgeon, Stephen Meredith**
**14 Grafton Crescent**
**London NW1 8SL (GB)**

(72) Inventor: **Pidgeon, Stephen Meredith**
**14 Grafton Crescent**
**London NW1 8SL (GB)**

(74) Representative: **Jennings, Nigel Robin et al**
**KILBURN & STRODE 30 John Street**
**London WC1N 2DD (GB)**

(54) **Radiator valves.**

(57) A radiator valve comprises a conventional valve body (10) defining a valve passage and a valve member (19) which is movable to regulate the flow of heating fluid through the valve passage. A thermostat (56) normally regulates the flow of heating fluid in accordance with ambient air temperature. A heating element (42) adjacent the thermostat (56) may be supplied with heating fluid through an inlet channel (59) which communicates with the valve passage upstream of the valve member (19). When a timer (50) opens a bistable valve (66) in an outlet channel (63), which connects the heating element (42) with the downstream side of the valve member (19) the thermostat (56) is warmed and thus shuts the valve completely, regardless of the ambient temperature. When the valve (66) is closed the heating element (42) cools down and the radiator is then subject to normal thermostatic control.

The radiator valve allows individual radiators in a common heating system to be controlled individually as regards both temperature and time.

Fig. 1

**Description**

RADIATOR VALVES

The present invention relates to radiator valves such as are used to control the flow of heating fluid through a radiator of a domestic or commercial central heating system and is concerned with that type of such valve which comprises a valve body defining a valve passage, a valve member movable to regulate the flow of fluid through the valve passage and temperature sensitive valve actuating means arranged to move the valve member and substantially to close the valve when the temperature of the valve actuating means rises to a predetermined value.

Conventional radiator valves comprise a metallic fitting with inlet and outlet connections and define a valve seat around the flow path which co-operates with a valve member which is movable by a manually rotatable handle to throttle or shut off the flow of the heating fluid. As regards the ambient air temperature, the central heating boiler is generally controlled by a single thermostat which is responsive to temperature at one location and also by a timer which is set to switch the boiler on and off at predetermined times. Such a conventional central heating system does not permit the individual control of the temperature in different rooms since the temperature of the heating fluid is controlled by a single thermostat. Thermostatically controlled radiator valves are, however, also known which permit different rooms to be heated to different temperatures by the same central heating system by setting the thermostat associated with each radiator valve to a different temperature.

Whilst the use of thermostatic valves permits different rooms to be heated to different temperatures, the use of a single timer means that all the radiators are inherently heated at the same time. This can be very wasteful of energy since it is often desirable to heat different rooms of a house at different times, for instance the living rooms during the day only and the bedrooms during the night only.

It is an object of the present invention to provide a radiator valve which permits the associated radiator to be switched on and off at predetermined times independently of the other radiators connected to the same system and which preferably is so constructed that the room in which the associated radiator is situated is heated only to an adjustable predetermined temperature.

According to the present invention a radiator valve of the type described above is characterised by a heating element arranged in heat exchange relationship with the valve actuating means and adjustable timing means operable to control the heating of the heating element and thus to open and close the valve according to a predetermined timing sequence.

A radiator valve according to the invention thus allows each radiator in a heating system to be controlled to come on and go off in accordance with the settings on its associated timer.

The heating element may take many forms and may constitute, for instance, an electrical heating coil.

However, such a coil will have a considerable energy consumption. Preferably, the heating element comprises a fluid space which is situated adjacent the valve actuating means and is connected to an auxiliary fluid path communicating at its ends with the valve passage upstream and downstream of the valve member, respectively. In this case, it is desirable that the valve is of the bistable type.

The bistable valve may also include biasing means which bias it to the closed position. In this case the valve can be arranged to be biased to the closed position by the pressure differential across the valve.

Preferably, the timing means are constituted by an electronic timer which may be powered by a battery. Desirably both the battery and the timer are mounted on the valve substantially within the radial extent of the valve.

Preferably, the temperature sensitive valve actuating means is arranged progressively to throttle and then to close the valve passage as its temperature rises.

The present invention can be put into practice in several ways, one of which will now be described by way of example with reference to the accompanying drawings in which:

Figure 1 is a section through a radiator valve according to the present invention; and

Figures 2a) and b) are illustrations of the bistable valve incorporated in the radiator valve in Figure 1.

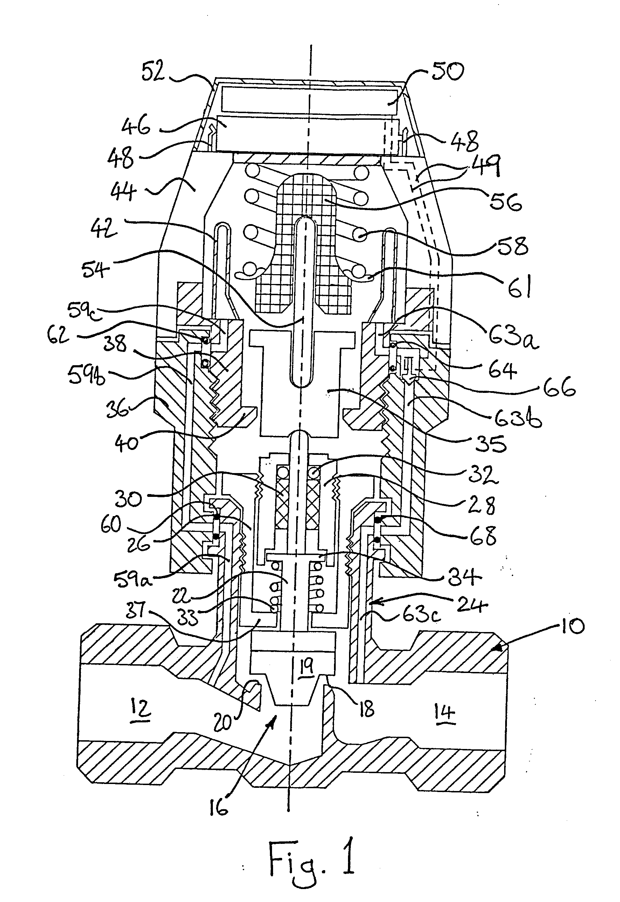

Referring to Figure 1, a time and temperature controlled radiator valve comprises a valve body 10 having an inlet and an outlet chamber 12 and 14 respectively. The inlet and outlet chambers 12 and 14 are provided with inlet and outlet connections (not shown) of conventional type for connection of the valve to a pipe and radiator.

A valve arrangement 16 divides the inlet chamber 12 from the outlet chamber 14. The valve arrangement 16 comprises an axially movable valve member 19 formed with a flat annular face 18 which co-operates with a complimentary valve seat 20, formed in the valve body 10, to regulate the flow of fluid through the valve.

The valve member 19 includes a vertical valve stem 22 which extends away from the valve seat 20 through a neck portion 24 of the valve body 10. The valve stem 22 also passes through an aperture in an outer sleeve 26 which is threadedly received in the neck 24. A chamfered radially extending face at the top of the outer sleeve 26 engages a complimentary face at the top of the neck portion 24 to seal against fluid seeping past the threads between the neck portion 24 and the outer sleeve 26 and into the valve components above it.

An inner packing sleeve 28 is threadedly received within the upper part of the outer sleeve 26. A bearing bush and sealing ring 30 and 32 respectively are located within the inner sleeve 28 and slidably engage the valve stem 22 and provide both a seal against fluid seeping past the valve stem 22 into the valve components above it and radial support for the valve stem 22.

An outwardly extending collar 34 is formed part way along the valve stem 22. A biasing spring 33 bears against the collar 34 and an inwardly radially extending flange 37 formed on the bottom of the outer sleeve 26 to urge the member 19 away from the valve seat 20.

The top of the valve stem 22, extending past the inner sleeve 28, is received in a recess in the base of a guide bush 35.

A valve housing 36 is mounted on the neck portion 24. Threadedly engaged within the housing 36 is a supporting collar 38 which is formed with a radially inwardly extending annular flange 40 at its lower end. The flange 40 extends around and in close proximity to the movable guide bush 35 and constrains it to move axially with respect to the valve stem 22. The supporting collar 38 is freely rotatable on the threads engaging it within the housing 36.

The supporting collar 38 also supports a plastics control knob 44 which comprises a plurality of radially extending slats which allow a free flow of air through the knob 44. On top of the control knob 44 is a flat area on which are mounted a battery 46, secured between resilient battery retaining contacts 48, and an electronic timer 50 powered by the battery 46. The battery and timer 50 are covered by a transparent protective cap 52 which protects them from dust and moisture while allowing a liquid crystal display on the upper face of the timer to be read.

An upper shaft 54 extends axially out of a recess in the upper surface of the guide bush 35 into a recess in an expansible wax filled thermostatic temperature sensitive element 56. The element 56 is urged downwardly onto the upper shaft 54 by means of a helical spring 58 bearing against a flange 61 formed on the element 56, at one end, and against the top of the control knob 44, at the other end. The helical spring 58 is substantially stiffer than the biasing spring 33.

A heating element 42 consisting of an annular fluid conduit defined by a thin metal sheet bent into generally U shape is connected to the top of the supporting collar 38 by soldering the ends of the limbs of the U thereto.

An auxiliary fluid path comprising inlet and outlet channels 59 and 63 is formed in the valve which connects the interior of the heating element 42 with the inlet and outlet chambers 12 and 14. The inlet channel comprises a portion 59a formed in the neck portion 24 of the valve body 10 and extending from the inlet chamber 12 to a gallery defined by a first O-ring seal 60 between the neck portion 24 and the housing 36; a portion 59b formed in the housing 36, and; a further portion 59c formed in the supporting collar 38 which communicates with the portion 59b by means of a further gallery defined by a second O-ring seal 62 in the gap between the housing 36 and the supporting collar 38. The O-ring seal is mounted on the housing 36 and extends around the inner periphery thereof in a generally elongate fashion. The channel 59c communicates with the interior of the heating element 42 at its base.

Diametrically opposite the inlet channel 59 is an outlet channel 63 which may also be considered to constitute three portions, namely a portion 63a which extends from the heating element 42 through the supporting collar 38 to a gallery defined by a third O-ring seal 64 between the supporting collar 38 and the housing 36; the O-ring seal is mounted on housing 36 and extends around the inner periphery thereof in a generally elongate fashion; a portion 63b formed in the housing 36 and extending from the gallery defined by the O-ring 64 to another gallery defined by a fourth O-ring 68 between the housing 36 and the neck portion 24, and a portion 63c which extends from the gallery defined by the O-ring 68 to the outlet chamber 14.

Situated in the channel 63b is a bistable electrically controlled solenoid or servo valve 66 which is operable to open and close the outlet passage 63 under the control of the electronic timer 50 to which it is connected to by means of wires 49.

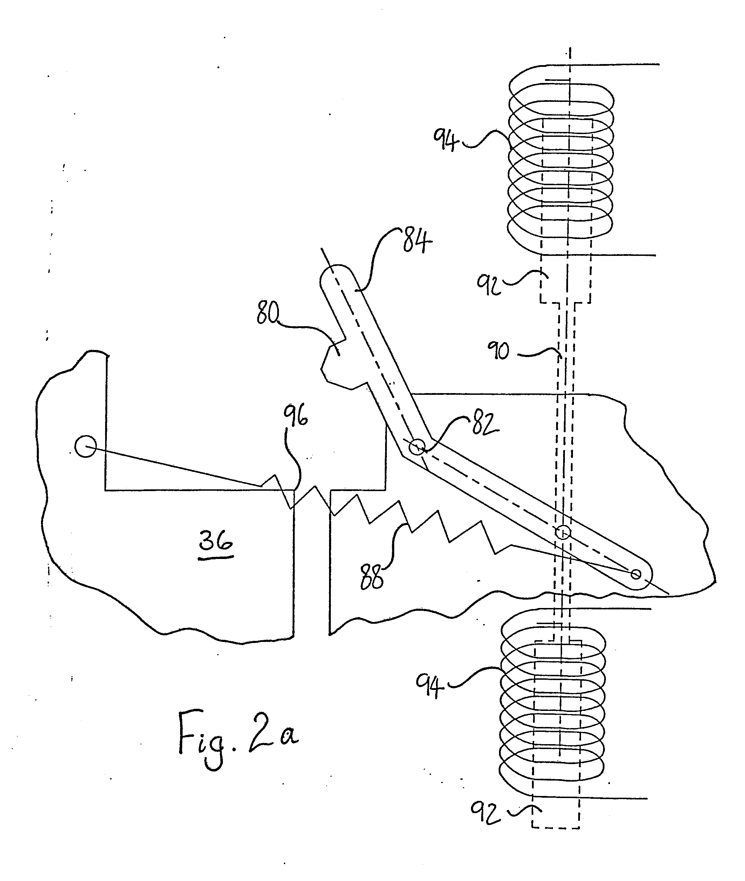

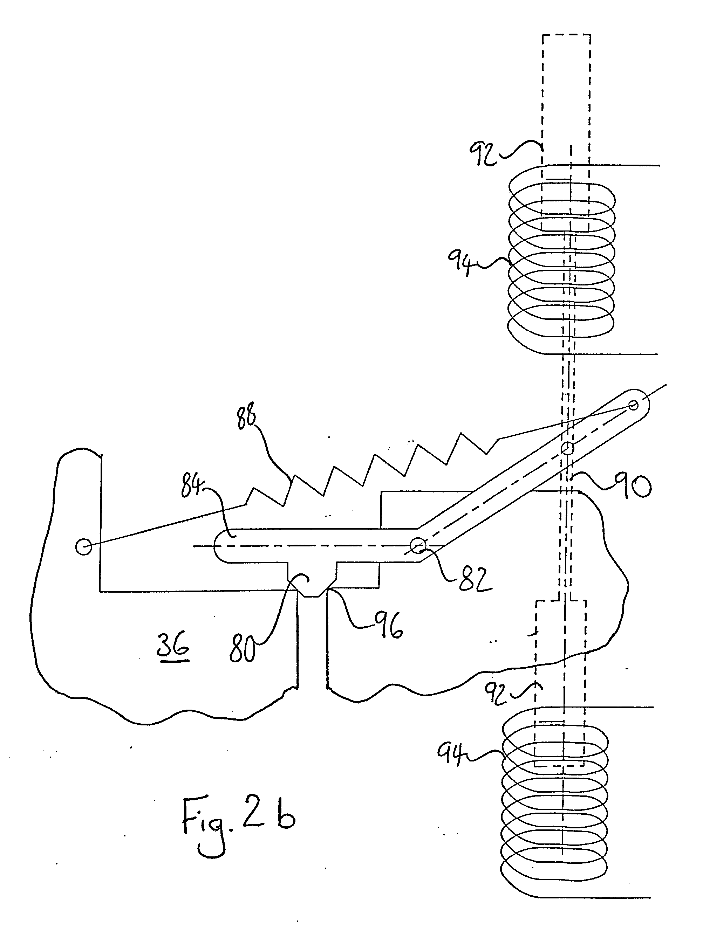

Figures 2a and b illustrate an embodiment of the bistable valve 66. A valve member 80 is formed on one side of a pivot 82 on an over-centre lever arm 84. The lever arm 84 is pivotably mounted on the housing 36 by the pivot 82. A spring 88 is attached both to the other side of the lever arm 84 and to the housing 36. A bar 90 is connected at each end to a solenoid core 92 associated with a corresponding solenoid coil 94 and at its centre to the lever arm 84. When the valve is in the configuration shown in Figure 2a and the lower solenoid coil 94 (as shown in the drawing) is energised by means of a pulse from the timer 50, the lever arm 84 is pivoted about the pivot 82 such that the valve member 80 moves towards a valve seat 96 formed in the housing 36, throttling the heating fluid flow through the inlet and outlet channels 59 and 63. The spring 88 moves below the axis of the pivot and completely closes the valve 66 so that it is in the configuration shown in Figure 2b.

When the upper solenoid coil 94 is energised by means of a pulse from the timer 50 the configuration of the valve is reversed again thus allowing the heating fluid to flow through the inlet and outlet channels 59 and 63.

In normal operation the solenoid valve 66 is closed and the radiator valve acts as a normal thermostatic valve. As the ambient temperature increases, the temperature sensor 56 expands generally axially with respect to the valve stem 22, moving the valve member 19 toward the valve seat 20, thereby restricting the rate of fluid flow through the inlet and outlet chambers 12 and 14. When the ambient temperature reaches a predetermined temperature the valve is fully closed. If the ambient temperature exceeds the predetermined temperature the axial further expansion of the temperature sensor 56 is absorbed by the spring 58.

The control knob 44 is attached to the supporting collar 38 and hence a rotation of the control knob 44 will cause the supporting collar 38 to rotate on its supporting threads engaging the housing 36 and thus to move vertically with respect to the housing.

When the supporting collar 38 moves downwardly with respect to the housing 366 the helical spring 58, upperstem 54, guide bush 35 and valve member 19 also move down and thus closer to the valve seat 20. Opposite rotation of the control knob will allow the valve member 19 to move upwardly with respect to the seat 20 being urged by the biasing spring 33. In this way the position of the valve member 19 in relation to the valve seat 20, and thus the operational temperature range over which the sensor 56 will act are adjusted.

The pitch of the thread between the housing 36 and supporting collar 38 is particularly coarse and provides sufficient adjustment of the valve member 19 with respect to the seat 20 within less than 180 degrees in order to allow the elongate O-rings 62 and 64 to keep in registry with the inlet and outlet channels 59c and 63a respectively. The temperature at which the radiator valve is to become closed may be indicated by a co-operating temperature scale and indicator on the control knob and the housing 36.

Each radiator connected with such a valve can be individually set to maintain a room or other enclosure at a desired temperature independently of the other radiators connected to the same heating system. Such radiator valves are adjustable to operate over a temperature range of, for example, 6 to 26°C. If the servo valve 66 is opened, a small stream of hot fluid from the inlet chamber 12 is diverted through the inlet channel 59 to circulate around the heating element 42. The heating fluid is returned to the main fluid flow through the outlet channel 63, past the servo valve 66 and into the outlet chamber 14. Thus, the heating fluid will cause heat to be transferred from the heating element 42 to the sensor 56 which expands accordingly. The heating element will subject the sensor 56 to a temperature in excess of the ambient air temperature and the valve will thus close and terminate the flow of heating fluid between the inlet and outlet chambers 12 and 14.

The solenoid valve 66 is opened and closed under the control of the timer 50 which effectively overrides the normal thermostatic control and thus switches the radiator on and off regardless of the ambient temperature of the room in which the radiator valve is situated. After the bistable solenoid valve 66 has remained open for a period shutting off the radiator valve for a predetermined time, the timer 50 is programmed to transmit an actuating signal to the valve 66 and cause it to close. When this happens the flow through the heating element 42 ceases, causing the sensor 56 to cool down and retract. Once the retraction of the sensor 56 is sufficient, the thermostatic operation of the radiator valve in response to ambient air temperature resumes.

A typical timer for use in this invention is, for example, a MM53 series clock/timer integrated circuit as manufactured by National Semiconductor. Using such a timer it is possible to programme the valve to be switched on and off several times in one day on either a 24 hour or a 7 day cycle depending on the specific timer used. By virtue of the fact that the valve 66 is bistable, the timer 50 is not required to maintain the valve member 19 in the open and/or closed position and thus power to the coils 94 is required only on a change of state.

It is important that the radiator valve according to the invention is placed upstream of the radiator which it is to control in order to ensure that the flow of water through the heating element 42 remains sufficiently hot to influence the expansion of the sensor 56.

With regard to the valve 66, it is desirable that the valve member 80 be movable to engage the valve seat 96, generally in the direction of flow of fluid through the outlet channel 63. In this way, should the bistable mechanism fail, the valve 66 will be biased by the fluid flow to the closed position thus shutting down the heating effect of the heating element 42 so that the radiator valve can function in a conventional thermostatic fashion.

In an alternative embodiment the valve 66 is provided with a single coil and associated core. The control signals for opening and closing the servo valve are then pulses of opposite polarity which cause the core to move in opposite directions.

In some circumstances it may be desirable to provide the heating element 42 with a bleed valve in its upper portion to vent air in the element. In this case, the heating fluid will occupy substantially all of the volume of the element 42 and provide an increased heating effect.

## Claims

1. A radiator valve comprising a valve body (10) defining a valve passage (12,14), a valve member (19) movable to regulate the flow of fluid through the valve passage and temperature sensitive valve actuating means (56) arranged to move the valve member and substantially to close the valve when the temperature of the valve actuating means rises to a predetermined value, characterised by a heating element (42) arranged in heat exchange relationship with the valve actuating means (56) and adjustable timing means (50) operable to control the heating of the heating element (42) and thus to open and close the radiator valve according to a predetermined timing sequence.

2. A radiator valve as claimed in claim 1, characterised in that the heating element (42) comprises a fluid space which is situated adjacent the valve actuating means (56) and is connected to an auxiliary fluid path (59,63) communicating at its ends with the valve passage upstream and downstream of the valve member (19), respectively.

3. A radiator valve as claimed in claim 2, characterised by a valve (66) arranged in the auxiliary fluid path (63) and connected to the timing means (50) to control fluid flow in the auxiliary fluid path (59,63).

4. A radiator valve as claimed in claim 3, characterised in that the valve (66) is of the bistable type.

5. A radiator valve as claimed in claim 4, characterised in that the valve (66) is arranged to be biased into the closed position by the pressure differential across the valve (66).

6. A radiator valve as claimed in any of claims 1 to 5, characterised in that the adjustable timing means are constituted by an electronic timer (50).

7. A radiator valve as claimed in claim 6, characterised in that the electronic timer (50) is powered by a battery (46).

8. A radiator valve as claimed in claim 7, characterised in that the battery (46) and timer (50) are mounted on the radiator valve.

9. A radiator valve as claimed in any one of the preceding claims, characterised in that the temperature sensitive valve actuating means (56) is arranged progressively to throttle and then to close the valve passage (12,14) as its temperature rises.

10. A radiator valve as claimed in any one of the preceding claims, characterised by adjustment means (44,40,36) arranged to permit the said predetermined value of the temperature to be adjusted.

0264249

Fig. 1

0264249

Fig. 2a

0264249

Fig. 2 b